# EUROPÄISCHE PATENTSCHRIFT

(11) **EP 1 700 674 B1**
(45) Veröffentlichungstag und Bekanntmachung des Hinweises auf die Patenterteilung: **02.04.2008**
(21) Anmeldenummer: 05005215.8
(22) Anmeldetag: 10.03.2005
(51) Int. Cl.: B26B 13/24, B26B 19/38

(54) **Steuergerät für ein beheizbares Friseur-Schneidwerkzeug**
Controller for a heatable hair cutting tool
Appareil de commande d'un instrument de coupe de cheveux chauffant

(43) Veröffentlichungstag der Anmeldung: 13.09.2006
(73) Patentinhaber: "Jaguar" Stahlwarenfabrik GmbH & Co. KG, 42653 Solingen (DE)
(72) Erfinder: Dreher, Walter, 78914 Immendingen (DE)
(74) Vertreter: Jungen, Rolf

(56) Entgegenhaltungen:
- WO-A-02/087833
- DE-A1- 10 107 285
- US-A- 5 309 640
- US-B1- 6 735 871

## Beschreibung

Die Erfindung betrifft ein Steuergerät für ein beheizbares Friseur-Schneidwerkzeug nach dem Oberbegriff von Anspruch 1 sowie ein Verfahren zu dessen Betrieb.

Es ist auf dem Gebiet bekannt, beim Schneiden von Haaren ein beheizbares Friseur-Schneidwerkzeug zu verwenden um die Haarspitzen zu versiegeln. Hierdurch kann verhindert werden, dass die multiaktive Kittsubstanz austrocknet und körpereigene Feuchtigkeits- und Pflegesubstanzen des Haares ausgeschieden werden. In der internationalen Patentanmeldung PCT/DE02/01491 ist ein Steuergerät sowie ein Verfahren zu dessen Betrieb für ein beheizbares Friseur-Schneidwerkzeug beschrieben. Damit sich das Steuergerät automatisch auf das angeschlossene Friseur-Schneidwerkzeug einstellt bzw. automatisch unterschiedliche Kabellängen zwischen dem Steuergerät und dem Schneidwerkzeug berücksichtigt werden, ist ein Mittel zur Erfassung des Heizstroms und/oder der Heizspannung vorgesehen, wobei durch die Bestimmung dieser elektrischen Größen der Widerstand des angeschlossenen Schneidwerkzeugs einschließlich des Widerstands des verwendeten Kabels ermittelt werden kann. Aufgrund einer vorgegebenen Widerstandsabstufung der verschiedenen an das Steuergerät anschließbaren Friseur-Schneidwerkzeuge und der verwendbaren Kabel kann das angeschlossene Schneidwerkzeug und das verwendete Kabel ermittelt werden. Mit dem automatischen Erkennen des angeschlossenen beheizbaren Friseur-Schneidwerkzeugs kann dieses mit dessen spezifischen Betriebsparametern geheizt werden, die in einem Speicher abgelegt sind.

Die beschriebene Ermittlung des angeschlossenen Friseur-Schneidwerkzeugs und das Abrufen der für dieses abgespeicherte Betriebsparameter ist sowohl vorrichtungsseitig als auch verfahrensseitig mit einem verhältnismäßig hohen Aufwand verbunden. Dieser Aufwand erhöht sich weiter, wenn die Abhängigkeit der Betriebsparameter wie beispielsweise des Heizstroms von der Temperatur berücksichtigt werden soll.

Insofern liegt der vorstehenden Erfindung die Aufgabe zugrunde, zumindest für einen Teil von beheizbaren Friseur-Schneidwerkzeugen ein Steuergerät bzw. ein entsprechendes Verfahren zu dessen Betrieb bereitzustellen, bei welchem der apparative bzw. der verfahrensseitige Aufwand vermindert ist und darüber hinaus auch die Temperaturabhängigkeit eines Betriebsparameters berücksichtigt werden kann.

Diese Aufgabe löst die Erfindung schon mit der Bereitstellung eines Steuergeräts mit den Merkmalen von Anspruch 1 bzw. mit einem Verfahren zum Betrieb eines derartigen Steuergeräts mit den Merkmalen nach Anspruch 7.

Danach umfasst das erfindungsgemäße Steuergerät für ein beheizbares Friseur-Schneidwerkzeug mit zumindest einer Schneide eine Steuereinrichtung, ein Mittel zur Eingabe von zumindest einem vorbestimmten Betriebsparameter, insbesondere einer Solltemperatur von zumindest einer Schneide des Friseur-Schneidwerkzeugs, eine Leistungsschaltungseinrichtung zum Bereitstellen einer Heizspannung, ein Mittel zum Anschließen des beheizbaren Friseur-Schneidwerkzeugs an das Steuergerät, ein Mittel zum Erfassen des Ist-Heizstromes und ein Mittel zum Erfassen der Ist-Temperatur der zumindest einen Schneide des Friseur-Schneidwerkzeugs, wobei die Steuereinrichtung die Leistungsschaltungseinrichtung zum Bereitstellen der Heizspannung im Ansprechen auf, d.h. unabhängig von Soll- und Ist-Temperatur ansteuert. Das erfindungsgemäße Steuergerät zeichnet sich durch ein von der Steuereinrichtung gesteuertes Mittel zum diskreten Erhöhen der Heizspannung aus sowie durch ein Mittel zum Vergleichen eines, bei einer eingestellten Heizspannung erfassten Ist-Heizstromes mit einem vorgegebenen Soll-Heizstrom, wobei das schrittweise Erhöhen der Heizspannung abbrechenbar ist, wenn der Heizstrom innerhalb eines vorgegebenen Bereichs zum Soll-Heizstrom liegt.

Der Erfindung liegt die Idee zugrunde, beheizbare Friseur-Schneidwerkzeuge mit einem vorgegebenen, maximalen Heizstrom zu heizen, der vorbestimmt ist. Dabei kann dieser Soll-Heizstrom entweder anwenderspezifisch einstellbar sein oder auch im Gerät fest vorgegeben. Hierdurch vereinfacht sich die Gestaltung und der Betrieb des Steuergeräts. Unabhängig von dem angeschlossenen Friseur-Schneidwerkzeug wie Haarschere, Modellierschere oder Rasiermesser stellt sich das Gerät automatisch auf eine solche Heizspannung ein, dass der vorgegebene Soll-Heizstrom fließt. Mit dieser vorrichtungsseitigen bzw. verfahrensseitigen Maßnahme ist somit sichergestellt, dass die elektrischen Komponenten nicht überlastet werden. Da sich der Widerstand der herkömmlicherweise verwendeten Heizelemente mit steigender Temperatur erhöht, wird durch die erfindungsgemäße Maßnahme auch erreicht, dass mit steigender Temperatur die Heizspannung erhöht wird, sodass eine Kompensation erfolgt. Letztlich vereinfacht sich das Beheizen eines Friseur-Schneidwerkzeuges sowohl vorrichtungsseitig als auch verfahrensseitig.

Es sei darauf hingewiesen, dass die verwendeten Begriffe wie "Ist-Heizstrom", "Heizstrom", "Ist-Heizspannung", oder "Heizspannung" eine Amplitude der jeweiligen Größe bezeichnen, wenn die Leistungsschaltungseinrichtung mit einer Gleichstromquelle betrieben wird oder eine charakteristische Wechselstromgröße wie den Effektivwert oder den Spitzenwert, wenn die Leistungsschaltungseinrichtung mit einer Wechselstromquelle betrieben wird.

Wie angegeben, wird bei einem angeschlossenen Friseur-Schneidwerkzeug der vorgegebene Soll-Heizstrom dadurch eingestellt, dass ausgehend von einer niedrigen Heizspannung, beispielsweise einer Heizspannung von Null diese diskret erhöht wird und nach jeder Erhöhung der Ist-Heizstrom gemessen wird, wobei die Heizspannung weiter erhöht wird, wenn der Ist-Heizstrom nicht innerhalb eines vorgegebenen Bereichs zum Soll-Heizstrom liegt. Sobald der Ist-Heizstrom innerhalb dieses vorgegebenen Bereichs zum Soll-Heizstrom liegt, bricht das Steuergerät ab und die ermittelte Heizspannung wird für die nachfolgende Regelung der Soll-Temperatur der zumindest einen Schneide des Friseur-Schneidwerkzeugs verwendet.

Vorteilhafte Weiterbildungen der Erfindung sind in den Unteransprüchen angegeben.

Es kann zweckmäßig sein, wenn das Steuergerät eine Speichereinrichtung aufweist, in welcher der vorgegebene Soll-Heizstrom bzw. die ermittelte Heizspannung ablegbar sind. Die abgelegten Größen können während des Betriebs dann von der Steuereinrichtung ausgelesen und insbesondere zur Steuerung der Leistungsschaltungseinrichtung verwendet werden.

Ein geringer vorrichtungsseitiger Aufwand ist mit einer 2-Punkt-Steuerung des Heizungsstroms zur Regelung der Temperatur der zumindest einen Schneide des Friseur-Schneidwerkzeugs verbunden. Wie dem Fachmann bekannt, schaltet dabei die Steuerung zur Regelung der Temperatur den Heizstrom zwischen zwei Werten, zweckmäßigerweise hier zwischen einem Heizungsstrom von Null und dem vorgegebenen Soll-Heizstrom. Dieser Heizstrom ist wiederum durch das Einstellen der jeweiligen ermittelten Heizspannung an der Leistungsschaltungseinrichtung einstellbar.

Wie der Fachmann erkennt, kann das erfindungsgemäße Steuergerät so ausgebildet sein, dass die Heizspannung eine Wechselspannung ist, andererseits kann die Heizspannung auch als Gleichspannung bereitgestellt werden. Im letzten Fall wiederum kann vorgesehen sein, dass die Leistungsschaltungseinrichtung direkt eine Gleichspannungsquelle wie einen Akku umfasst, andererseits ist es jedoch auch möglich, dass eine netzgespeiste AC/DC-Transformatoreinrichtung eine Gleichspannung für die Leistungsschaltungseinrichtung bereitstellt. Um die für die Erfindung notwendige veränderbare Heizspannung bereitzustellen, kann vorgesehen sein, dass der Leistungsschaltungseinrichtung ein steuerbarer DC/DC-Regler umfasst.

Zweckmäßigerweise kann eine Eingabevorrichtung vorgesehen sein, mit welcher zumindest eine Soll-Temperatur eingebbar ist. Darüber hinaus ist auch eine Anzeigeeinrichtung zweckmäßig zur Anzeige der eingestellten Soll-Temperatur und zur Anzeige eines Hinweises, wenn die Ist-Temperatur die eingestellte Soll-Temperatur erreicht hat. Somit ist der Anwender zu jedem Zeitpunkt über den jeweiligen Betriebszustand des Friseur-Schneidwerkzeugs informiert.

Besonders zweckmäßig ist es, wenn die Eingabeeinrichtung eine einzelne, multifunktionale Taste aufweist, mit welcher neben der Eingabe der Solltemperatur auch das Steuergerät ein- bzw. ausschaltbar ist. Vorteilhafterweise kann dabei vorgesehen sein, dass die mit der Taste auslösbaren verschiedenen Funktionen durch eine unterschiedliche Betätigungsdauer der Taste abrufbar sind.

Verfahrensseitig löst die Erfindung die obenstehend angegebene Aufgabe mit einem Verfahren zum Betrieb eines Steuergerätes für ein beheizbares Friseur-Schneidwerkzeug mit zumindest einer Schneide, wobei die Ist-Temperatur der zumindest einen Schneide erfasst wird und durch Verändern des Heizstroms und/oder der Heizspannung auf eine Soll-Temperatur geregelt wird, wobei in einer Initialisierungsphase die Heizspannung, ausgehend von einem vorgegebenen Minimumwert wie Null Volt schrittweise erhöht wird, der jeweilige Ist-Heizstrom bei der eingestellten Ist-Heizspannung ermittelt wird, der gemessene Ist-Heizstrom mit einem vorgegebenen Soll-Heizstrom verglichen wird und die Erhöhung der Heizspannung abgebrochen wird, wenn der Ist-Heizstrom innerhalb eines vorgegebenen Bereichs zum Soll-Heizstrom liegt. Auf diese Weise wird von dem angeschlossenen Schneidwerkzeug und den verwendeten Kabeln unabhängig die Heizspannung ermittelt, welche notwendig ist um einen Heizstrom zu erzeugen, welcher im Bereich des Soll-Heizstroms liegt. "Im Bereich" bedeutet dabei, dass der Ist-Heizstrom zumindest in der Nähe des Soll-Heizstroms liegt, insbesondere der Ist-Heizstrom gleich dem Soll-Heizstrom ist. "Im Bereich" umfasst natürlich auch Fälle, bei welchen der Ist-Heizstrom geringfügig größer oder kleiner als der Soll-Heizstrom ist.

Es ist zweckmäßig, wenn der ermittelte Wert der Heizspannung zum Einstellen des vorbestimmten Soll-Heizstromes abgespeichert wird um während der Temperaturregelung den Soll-Heizstrom einzustellen, wenn die Temperatur der zumindest einen Schneide kleiner als die Soll-Temperatur ist.

Es kann zweckmäßig sein, wenn nach der Neueinstellung einer Soll-Temperatur der zumindest einen Schneide des Friseur-Schneidwerkzeuges eine Initialisierungsphase gestartet wird, in welcher die Heizspannung ermittelt wird, die den vorgegebenen Soll-Heizstrom verursacht. Durch diese Maßnahme erfolgt eine Anpassung der Heizspannung auf den Ist-Widerstandswert des Heizelementes der Schneide, wodurch sich die Temperaturregelgeschwindigkeit des Steuergerätes erhöht.

Grundsätzlich kann eine Vielzahl von Regelungsverfahren zur Regelung der Temperatur der Schneide des Schneidwerkzeuges verwendet werden. Ein besonders einfaches Regelungsverfahren besteht in einer 2-Punkt-Regelung des Heizstroms, das in einer Regelungsphase verwendet wird, die sich der Initialisierungsphase anschließt. "2-Punkt-Regelung" bedeutet, dass nur zwei Heizstromwerte zur Temperaturregelung einstellbar sind, namentlich der vorbestimmte Soll-Heizstrom sowie ein sehr viel niedriger Heizstrom, insbesondere ein Heizstrom von Null. Dieser Soll-Heizstrom wird wie obenstehend angegeben durch das Einstellen des in der Initialisierungsphase ermittelten Wertes der Spannung zur Verursachung des Soll-Heizstroms erreicht.

Um zu vermeiden, dass in der Regelungsphase die Heizspannung bei einer 2-Punkt-Regelung in kurzen Abständen hin- und herschaltet, wenn die Temperatur sehr nah an der Solltemperatur der zumindest einen Schneide des Schneidwerkzeuges liegt, kann vorgesehen sein, dass die ermittelte Heizspannung so lange zur Bereitstellung eines Heizstromes angelegt wird, wie die Ist-Temperatur kleiner als die Summe von eingestellter Soll-Temperatur und einem vorgegebenen Temperaturunterschied von beispielsweise drei Grad ist. In gleicher Weise kann es zweckmäßig sein, wenn bei der Regelung, ausgehend von einem Heizstrom nahe Null die ermittelte Heizspannung zur Bereitstellung eines Heizstromes erst dann angelegt wird, wenn die Ist-Temperatur kleiner als die Differenz von eingestellter Soll-Temperatur und einem vorgegebenen Temperaturunterschied von beispielsweise zwei Grad ist. Hierdurch wird erreicht, dass beim Heizen die ermittelte Heizspannung erst abgeschaltet wird, wenn die Soll-Temperatur um einen vorgegebenen Temperaturunterschied überschritten ist und ähnlich die ermittelte Heizspannung erst dann wieder angeschaltet wird, wenn die Soll-Temperatur um einen vorgegebenen Betrag unterschritten ist. Auf diese Weise werden die Bauelemente des erfindungsgemäßen Steuergerätes geschont, ohne dass zu große Abweichungen in der Soll-Temperatur der zumindest einen Schneide des Friseur-Schneidwerkzeugs in Kauf genommen werden müssten.

Bei der angegebenen 2-Punkt-Regelung umfasst die Regelungsphase demnach eine Heizphase und eine Ruhephase, wobei die Heizphase den Zeitraum angibt, in welcher die ermittelte Heizspannung an das Friseur-Schneidwerkzeug angelegt ist und die Ruhephase die Zeitdauer angibt, in welcher die Heizspannung auf einen sehr viel geringeren Wert, insbesondere auf einen Wert von Null eingestellt ist. Aufeinanderfolgende Heizphasen bei konstant gehaltener Soll-Temperatur der zumindest einen Schneide weisen demnach die gleiche Heizspannung auf, d.h. die Heizspannung, welche ermittelt wurde zum Einstellen des vorgegebenen Soll-Heizstromes.

Die Erfindung wird im Folgenden durch das Beschreiben mehrerer Ausführungsformen unter Bezugnahme auf die beiliegende Zeichnung erläutert, die in einer Prinzipskizze ein erfindungsgemäß gestaltetes Steuergerät mit angeschlossenem Schneidwerkzeug zeigt.

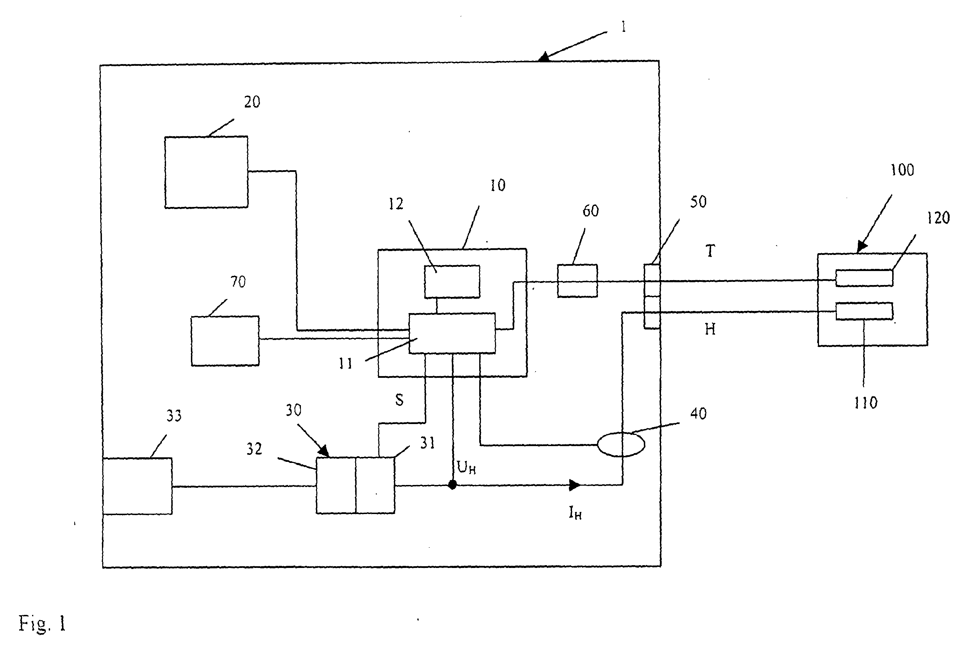

Das in Fig. 1 dargestellte erfindungsgemäß gestaltete Steuergerät 1 für ein beheizbares Friseur-Schneidwerkzeug weist eine Netzbuchse 33 auf, über welche das Steuergerät an ein herkömmliches Wechselstromnetz anschließbar ist. Die Netzbuchse 33 ist mit einer Leistungsschaltungseinrichtung 30 verbunden, die einen AC/DC-Wandler 32 und einen nachgeschalteten DC/DC-Wandler 31 aufweist. Dessen Ausgang ist mit einer Anschlusseinrichtung 50 verbunden, über welche das Steuergerät an ein beheizbares Friseur-Schneidwerkzeug 100 angeschlossen werden kann. Letztlich liegt die von der Leistungsschaltungseinrichtung 30 abgegebene Spannung an einem Heizelement 110 des Schneidwerkzeuges an, das wiederum in nicht dargestellter Weise in Kontakt mit einem der Schneiden des Friseur-Schneidwerkzeugs steht. Umfasst das Schneidwerkzeug wie bei einer Schere mehrere Schneiden, kann vorgesehen sein, dass mittels der Anschlusseinrichtung 50 mehrere Heizelemente versorgt werden, wobei insbesondere jeweils ein Heizelement für eine Schneide der angeschlossenen Friseur-Schneidwerkzeug vorgesehen sein kann.

Wie in der Figur dargestellt, ist am Schneidwerkzeug ein Temperaturleiter 120 an zumindest einer Schneide wie beispielsweise ein Heißleiter (NTC) oder ein Kaltleiter (PTC) vorgesehen, der auch mittels der Anschlusseinrichtung 50 mit der Steuereinrichtung über die Temperaturmessleitung T verbunden ist. Zwischen einem Controller 11 und der Anschlusseinrichtung 50 ist eine mit dem Temperaturleiter 120 zusammenwirkende Temperaturerfassungseinrichtung 60 angeordnet. Diese umfasst eine nicht dargestellte Stromquelle, welche einen vorgegebenen Strom in den Temperaturleiter 120 einprägt, wobei die sich am Leiter 120 ergebende Spannung erfasst wird und an den Controller 11 weitergegeben wird. Dieser stellt die zentrale Einheit der Steuereinrichtung 10 dar. Sie weist ferner einen Speicher 12 auf, wobei der Controller 11 über eine Steuerleitung S mit einem Regeleingang des DC/DC-Wandlers 31 verbunden ist. Darüber hinaus erfasst der Controller 11 mittels der Leitung U_{H} die Ausgangsspannung, d.h. die Heizspannung, welche vom Gleichspannungswandler 31 abgegeben wird. Ferner ist eine Strommesseinrichtung 40 vorgesehen, deren Ausgang auch am Controller 11 anliegt. Mittels einer Eingabeeinrichtung 20 sind Vorgabewerte wie beispielsweise ein Soll-Heizstrom oder eine Soll-Temperatur eingebbar.

Im Folgenden soll die Betriebsweise des in Fig. 1 gezeigten Steuergeräts beschrieben werden. Vor der Inbetriebnahme wird wie dargestellt ein Friseur-Schneidwerkzeug 100 wie eine Haarschere, eine Effilierschere, eine Modellierschere oder auch ein Rasiermesser angeschlossen, die mindestens eine beheizbare Schneide aufweisen. Darüber hinaus wird das Steuergerät 1 mittels der Netzbuchse 33 an ein herkömmliches öffentliches Versorgungsnetz angeschlossen. Über die Eingabeeinrichtung 20 wird je nach Anwendung eine bestimmte Soll-Temperatur des Friseur-Schneidwerkzeuges eingestellt. Nun kann auch über die Eingabeeinrichtung 20 die Steuereinrichtung 1 gestartet werden. Hierdurch wird eine Initialisierungsphase in Gang gesetzt, bei welcher die von der Leistungsschaltungseinrichtung 30 abgegebene und gleichgerichtete Heizspannung U_{H} ausgehend von einer Amplitude von 0 Volt langsam erhöht wird. Hierzu wird der regelbare DC/DC-Wandler durch den Controller 11 entsprechend zum stufenweisen Erhöhen der Heizspannung U_{H} digital angesteuert. In einer bestimmten Ausführungsform wird der DC/DC-Wandler zur Abgabe einer maximalen Gleichspannungsamplitude von 24 Volt in 1.024 Schritten (10 Bit) angesteuert, d.h. in Schritten von 0,0234 Volt. Nach jedem Erhöhungsschritt wird über die Strommesseinrichtung 40 der sich ergebende Heizstrom I_{H} ermittelt und an den Controller 11 weitergegeben. Dieser vergleicht nun den über die Eingabeeinrichtung 20 angegebenen und im Speicher 12 abgelegten Soll-Heizstrom mit dem gemessenen Ist-Heizstrom. Ergibt der Vergleich, dass der Ist-Heizstrom mehr als 0,05 Ampere niedriger als der Soll-Heizstrom liegt, wird die Heizspannung U_{H} um einen weiteren Schritt, d.h. um weitere 0,0234 Volt erhöht und daraufhin wiederum der Ist-Heizstrom gemessen. Daran schließt sich ein weiterer Vergleich des Ist-Heizstroms mit dem Soll-Heizstrom an. Diese Schritte werden solange durchgeführt bis die Messung des Heizstromes ergibt, dass der Ist-Heizstrom nicht mehr als 50 mA vom Soll-Heizstrom entfernt ist oder grö-βer als der Soll-Heizstrom ist. Über diese Initialisierungsphase wird, wie beschrieben, die Heizspannung ermittelt, welche notwendig ist, um den Soll-Heizstrom zum Heizen der angeschlossenen Heizelemente 110 bereitzustellen. Die ermittelten Parameter zur Ansteuerung des DC/DC-Wandlers über die Steuerleitung S werden in der Speichereinrichtung 12 durch den Controller 11 abgelegt und stehen für die nachfolgende Regelphase zur Verfügung.

In einer weiteren Ausführungsform wird der DC/DC-Wandler zur Abgabe einer maximalen Gleichspannungsamplitude von 5 Volt angesteuert, wobei der Spannungsbereich von 1- 5 Volt mit 10 Bit abgestuft ist, was einem Einzelschritt von ca. 0,004 Volt entspricht.

Das in Fig. 1 dargestellte Steuergerät arbeitet in dieser Regelphase mittels einer 2-Punkt-Regelung des Heizstromes, wobei entweder eine Heizspannung von Null, d.h. ein Heizstrom von Null oder die in der Initialisierungsphase ermittelte Heizspannung, d.h. zumindest in etwa der voreingestellte Soll-Heizstrom eingestellt wird. Hierzu steuert der Controller 11 den DC/DC-Wandler zur Abgabe der jeweiligen Heizspannung. Die Regelung erfolgt derartig, dass der Heizstrom solange an das Schneidwerkzeug 100 abgegeben wird, wie die gemessene Temperatur der Schneide des Schneidwerkzeuges kleiner als die Summe von Soll-Temperatur und 3°C ist. Ist beispielsweise die Soll-Temperatur auf 150°C eingestellt, fließt solange der Heizstrom bis die Temperatur der Schneide größer als 153°C beträgt. Sobald dieser Grenzwert überschritten ist, wird der Heizstrom abgeschaltet.

Die Steuereinrichtung 10 ermittelt kontinuierlich die Temperatur durch die beschriebene Stromeinprägung in den Temperaturleiter 120. Ist die Temperatur auf einen Wert kleiner als 148°C abgefallen, steuert der Controller 110 über die Steuerleitung S den DC/DC-Wandler zur Bereitstellung der ermittelten Heizspannung an, sodass dann wieder ein Heizstrom I_{H} fließt, der im Bereich des Soll-Heizstromes liegt. Demnach wechseln sich in der Regelphase eine Heizphase und eine Ruhephase ab, wobei in der Heizphase die ermittelte Heizspannung an das Friseur-Schneidwerkzeug angelegt wird und in der Ruhephase die Heizspannung in der beschriebenen Ausführungsform auf Null eingestellt ist. Nach einer solchen Ruhephase wird wiederum die Heizspannung angelegt, welche in der vorhergehenden Heizphase angelegt war. Dies bedeutet, dass bei aufeinanderfolgenden Heizphasen mit der gleichen Heizspannung, d.h. der während der Initialisierungsphase ermittelten Heizspannung zum Einstellen des vorgegebenen Soll-Heizstromes geheizt wird.

Das Steuergerät weist ein LED-Display auf, das die eingestellte Soll-Temperatur anzeigt und darüber hinaus eine LED um den Regelungszustand anzuzeigen, wenn die eingestellte Soll-Temperatur erreicht ist.

Wenn der Benutzer eine andere Soll-Temperatur am erfindungsgemäßen Steuergerät auswählt, wird automatisch eine neue Initialisierungsphase gestartet, bei welcher die Heizspannung ermittelt wird die notwendig ist, den voreingestellten Soll-Heizstrom zu erzeugen. Ist diese Heizspannung festgelegt, erfolgt die Einstellung des Soll-Heizstromes mit dieser ermittelten Netzspannung, solange durch den Benutzer keine neue Eingabe einer Soll-Temperatur erfolgt.

In einer besonderen Ausführungsform der Erfindung ist vorgesehen, dass sich an jede Ruhephase eine Initialisierungsphase anschließt, bei welcher die Heizspannung zum Einstellen des Soll-Heizstromes ermittelt wird, die in der nachfolgenden Heizphase zum Bereitstellen des Heizstromes verwendet wird. Auf diese Weise wird erreicht, dass der eingestellte Heizstrom immer sehr nahe zum voreingestellten Soll-Heizstrom liegt. Die dauernde Kontrolle des optimalen Heizstromes hat darüber hinaus auch den Vorteil, dass auch ein plötzlich auftretender Kurzschluss an dem beheizbaren Schneidwerkzeug oder den Zuführungskabeln erkennbar ist und entsprechende Sicherheitsmaßnahmen wie ein schnelles Abschalten der Leistungsschaltungseinrichtung durchgeführt werden können.

In einer weiteren Ausführungsform wird nach der Wahl einer Soll-Temperatur und dem Heizstart mit einer ersten Initialisierungsphase die notwendige Heizspannung zum Einstellen des Soll-Heizstromes ermittelt und daraufhin eine erste Heizphase gestartet, bei welcher die in der ersten Initialisierungsphase ermittelte Heizspannung eingestellt ist. Nach dem erstmaligen Erreichen der Soll-Temperatur wird der Heizstrom abgeschaltet, d.h. eine erste Ruhephase schließt sich an. Zu dem Zeitpunkt, bei welchem ein erneutes Heizen notwendig ist, wird zuerst eine zweite Initialisierungsphase gestartet, bei welcher die Heizspannung ermittelt wird, die notwendig ist, den voreingestellten Heizstrom einzustellen, wenn sich die Schneide des Friseur-Schneidwerkzeuges im Bereich der Soll-Temperatur befindet. Mit der in dieser zweiten Initialisierungsphase ermittelten Heizspannung wird nachfolgend gearbeitet um die Regelung durchzuführen. Somit wird gegenüber der letztgenannten Ausführungsform vermieden, dass sich nach jeder Ruhephase eine Initialisierungsphase anschließt, darüber hinaus jedoch auch sichergestellt, dass mit der Heizspannung gearbeitet wird, welche optimiert für die eingestellte Soll-Temperatur ist.

### Bezugszeichenliste

- 1: Steuergerät
- 10: Steuereinrichtung
- 11: Controller
- 12: Speicher
- 20: Eingabeeinrichtung
- 30: Leistungsschaltungseinrichtung
- 31: DC/DC-Wandler
- 32: AC/DC-Wandler
- 33: Netzbuchse
- 40: Strommesseinrichtung
- 50: Anschlusseinrichtung
- 60: Temperaturerfassungseinrichtung
- 70: LED-Display
- 100: Friseur-Schneidwerkzeug
- 110: Heizelement
- 120: Temperaturleiter
- I_{H}: Heizstrom
- U_{H}: Heizspannung
- S: Steuerleitung
- H: Heizleitung
- T: Temperaturmessleitung

## Patentansprüche

1. Steuergerät für ein beheizbares Friseur-Schneidwerkzeug mit zumindest einer Schneide, umfassend:
- eine Steuereinrichtung;
- ein Mittel zur Eingabe von zumindest einem vorbestimmten Betriebsparameter, insbesondere einer Soll-Temperatur der zumindest einen Schneide des Friseur-Schneidwerkzeugs;
- eine Leistungsschaltungseinrichtung zum Bereitstellen einer Heizspannung;
- ein Mittel zum Anschließen des beheizbaren Friseur-Schneidwerkzeuges an das Steuergerät;
- ein Mittel zum Erfassen des Ist-Heizstromes und
- ein Mittel zum Erfassen der Ist-Temperatur der zumindest einen Schneide des Friseur-Schneidwerkzeugs, wobei die Steuereinrichtung die Leistungsschaltungseinrichtung zum Bereitstellen der Heizspannung im Ansprechen auf die Soll- und die Ist-Temperatur steuert;
**gekennzeichnet, durch** ein von der Steuereinrichtung gesteuertes Mittel (11) zum diskreten Erhöhen der Heizspannung, sowie ein Mittel zum Vergleichen eines, bei einer eingestellten Heizspannung erfassten Ist-Heizstromes mit einem vorgegebenen Soll-Heizstrom, wobei das schrittweise Erhöhen der Heizspannung abbrechbar ist, wenn der Ist-Heizstrom innerhalb eines vorgegebenen Bereichs zum Soll-Heizstrom liegt.

2. Steuergerät nach Anspruch 1, **gekennzeichnet durch** eine Speichereinrichtung (12) zum Speichern des vorgegebene Soll-Heizstromes und zum Ablegen einer erfassten Heizspannung und/oder Einstellparameter zum Einstellen der erfassten Heizspannung, bei welcher der vorgegebene Soll-Heizstrom fließt.

3. Steuergerät nach Anspruch 1 oder 2, **gekennzeichnet durch** eine 2-Punkt-Steuerung des Heizungsstroms zur Regelung der Temperatur der zumindest einen Schneide des Friseur-Schneidwerkzeugs (100), wobei die eingestellte Heizspannung die erfasste Heizspannung ist, bei welcher der Ist-Heizstrom innerhalb eines vorgegebenen Bereichs zum Soll-Heizstrom liegt.

4. Steuergerät nach Anspruch 1, 2 oder 3, **dadurch gekennzeichnet, dass** die Leistungsschaltungseinrichtung (30) eine Spannungsquelle aufweist, welche eine netzgespeiste AC/DC-Transformatoreinrichtung (32) oder eine Gleichspannungsquelle umfasst, der ein von der Steuereinrichtung gesteuerter DC/DC-Regler (31) nachgeschaltet ist zum Bereitstellen einer veränderbaren Heizspannung.

5. Steuergerät nach einem der Ansprüche 1 bis 4, **dadurch gekennzeichnet, dass** eine Eingabeeinrichtung (70) vorgesehen ist, mit welcher eine Soll-Temperatur eingebbar ist sowie eine Anzeigeeinrichtung (70) zur Anzeige der eingegebenen Soll-Temperatur und zur Anzeige, wenn die Ist-Temperatur die eingestellte Soll-Temperatur erreicht.

6. Steuergerät nach Anspruch 5, **dadurch gekennzeichnet, dass** die Eingabeeinrichtung (20) eine einzelne, multifunktionale Taste aufweist, mit der neben der Eingabe der Soll-Temperatur auch das Steuergerät ausschaltbar ist.

7. Verfahren zum Betrieb eines Steuergerätes für ein beheizbares Friseur-Schneidwerkzeug mit zumindest einer Schneide, insbesondere zum Betrieb eines Steuergeräts nach einem der Ansprüche 1 bis 6, wobei die Ist-Temperatur der zumindest einen Schneide erfasst wird und durch Verändern des Heizstromes und/oder der Heizspannung auf eine Solltemperatur geregelt wird, **dadurch gekennzeichnet, dass** in einer Initialisierungsphase die Heizspannung ausgehend von einem vorgegebenen Minimumwert schrittweise erhöht wird, der jeweilige Ist-Heizstrom bei der eingestellten Ist-Heizspannung ermittelt wird, der gemessene Ist-Heizstrom mit einem vorgegebenen Soll-Heizstrom verglichen wird, und die Erhöhung der Heizspannung abgebrochen wird, wenn der Ist-Heizstrom innerhalb eines vorgegebenen Bereichs zum Soll-Heizstrom liegt.

8. Verfahren nach Anspruch 7, **dadurch gekennzeichnet, dass** der ermittelte Wert der Heizspannung bzw. diesem Wert zugeordnete Einstellparameter zur Einstellung des vorbestimmten Soll-Heizstromes abgespeichert wird bzw. werden.

9. Verfahren nach Anspruch 7 oder 8, **dadurch gekennzeichnet, dass** nach der Neueinstellung einer Soll-Temperatur eine Initialisierungsphase zur Ermittlung der Heizspannung gestartet wird, welche den vorgegebenen Soll-Heizstromes verursacht.

10. Verfahren nach einem der Ansprüche 7 bis 9, **dadurch gekennzeichnet, dass** in einer sich der Initialisierungsphase anschließenden Regelungsphase der in der Initialisierungsphase ermittelte Wert der Heizspannung zur Einstellung des vorbestimmten Soll-Heizstromes bei einer 2-Punkt-Regelung des Heizstromes der zumindest einen Schneide des Friseur-Schneidwerkzeuges (100) verwendet wird.

11. Verfahren nach einem der Ansprüche 7 bis 10, **dadurch gekennzeichnet, dass** in einer sich der Initialisierungsphase anschließenden Regelungsphase die ermittelte Heizspannung solange zur Bereitstellung eines Heizstromes an das Friseur-Schneidwerkzeug angelegt wird, wie die Ist-Temperatur kleiner als die Summe von eingestellter Soll-Temperatur und einem vorgegebenen Temperaturunterschied ΔT1 von insbesondere 3 Grad ist.

12. Verfahren nach Anspruch 10 oder 11, **dadurch gekennzeichnet, dass** in der Regelungsphase ausgehend von einer Heizspannung gleich Null die ermittelte Heizspannung zur Bereitstellung eines Heizstromes an dem Friseur-Schneidwerkzeug angelegt wird, wenn die Ist-Temperatur kleiner als die Differenz von eingestellter Soll-Temperatur und einem vorgegebenen Temperaturunterschied ΔT2 von insbesondere 2 Grad ist.

13. Verfahren nach einem der Ansprüche 7 bis 12, **dadurch gekennzeichnet, dass** die in einer Heizphase eingestellte Heizspannung abgespeichert wird und bei der nächsten Heizphase die abgespeicherte Heizspannung eingestellt wird.

14. Verfahren nach einem der Ansprüche 7 bis 13, **dadurch gekennzeichnet, dass** eine Wechselstromquelle zur Bereitstellung einer Gleichspannung gleichgerichtet wird, und die Amplitude der Gleichspannung zur Einstellung eines in der Initialisierungsphase variablen Heizstromes gesteuert wird.

15. Verfahren nach Anspruch 14, **dadurch gekennzeichnet, dass** das Einstellen der Amplitude der Heizspannung mittels eines digital ansteuerbaren Spannungsreglers (31) durchgeführt wird.

## Claims

1. Control apparatus for a heatable hairdressing cutting tool with at least one cutter, comprising:
- a control device;
- means for input of at least one predetermined operating parameter, particularly a target temperature of the at least one cutter of the hairdressing cutting tool;
- a power circuit device for providing a heating voltage;
- means for connecting the heatable hairdressing cutting tool with the control apparatus;
- means for detecting the actual heating current and
- means for detecting the actual temperature of the at least one cutter of the hairdressing cutting tool, wherein the control device controls the power circuit device for providing the heating voltage in response to the target temperature and actual temperature;
**characterised by** means (11), which is controlled by the control device, for discrete increase in the heating voltage as well as means for comparing an actual heating current, which is detected in the case of a set heating voltage, with a predetermined target heating current, wherein the stepped increase in the heating voltage can be interrupted if the actual heating current lies within a predetermined range with respect to the target heating current.

2. Control apparatus according to claim 1, **characterised by** a storage device (12) for storage of the predetermined target heating current and for filing a detected heating voltage and/or setting parameters for the setting of the detected heating voltage at which the predetermined target heating current flows.

3. Control apparatus according to claim 1 or 2, **characterised by** a two-point control of the heating current for regulation of the temperature of the at least one cutter of the hairdressing cutting tool (100), wherein the set heating voltage is the detected heating voltage at which the actual heating current lies within a predetermined range with respect to the target heating current.

4. Control apparatus according to claim 1, 2 or 3, **characterised in that** the power circuit device (30) comprises a voltage source, which comprises a mains-fed AC/DC transformer device (32) or a direct voltage source downstream of which a DC/DC regulator (31), which is controlled by the control device, is connected for providing a variable heating voltage.

5. Control apparatus according to one of claims 1 to 4, **characterised in that** an input device (70) is provided, by which a target temperature can be input, as well as an indicating device (70) for indicating the input target temperature and for indicating when the actual temperature reaches the set target temperature.

6. Control apparatus according to claim 5, **characterised in that** the input device (20) comprises a single multi-function button by which, apart from input of the target temperature, also the control apparatus can be switched on.

7. Method of operating a control apparatus for a heatable hairdressing cutting tool with at least one cutter, particularly for operation of a control apparatus according to one of claims 1 to 6, wherein the actual temperature of the at least one cutter is detected and is regulated to a target temperature by varying the heating current and/or the heating voltage, **characterised in that** in an initialisation phase the heating voltage is increased in steps starting from a predetermined minimum value, the respective actual heating current at the set actual heating voltage is ascertained, the measured actual heating current is compared with a predetermined target heating current and the increase in the heating voltage is interrupted when the actual heating current lies within a predetermined range with respect to the target heating current.

8. Method according to claim 7, **characterised in that** the ascertained value of the heating voltage or setting parameters, which are associated with this value, for setting the predetermined target heating current is or are stored.

9. Method according to claim 7 or 8, **characterised in that** after resetting of a target temperature an initialisation phase, which causes the predetermined target heating current, for ascertaining the heating voltage is started.

10. Method according to one of claims 7 to 9, **characterised in that** in a regulating phase subsequent to the initialisation phase the value, which is ascertained in the initialisation phase, of the heating voltage is used for setting the predetermined target heating current at a two-point regulation of the heating current of the at least one cutter of the hairdressing cutting tool (100).

11. Method according to one of claims 7 to 10, **characterised in that** in a regulating phase subsequent to the initialisation phase the ascertained heating voltage is applied, for provision of a heating current, to the hairdressing cutting tool for as long as the actual temperature is less than the sum of set target temperature and a predetermined temperature difference ΔT1 of, in particular 3 degrees.

12. Method according to claim 10 or 11, **characterised in that** in the regulating phase the ascertained heating voltage for provision of a heating current is applied, starting from a heating voltage equal to zero, to the hairdressing cutting tool when the actual temperature is less than the difference of set target temperature and a predetermined temperature difference ΔT2 of, in particular, 2 degrees.

13. Method according to one of claims 7 to 12, **characterised in that** the heating voltage set in a heating phase is stored and the stored heating voltage is set in the case of the next heating phase.

14. Method according to one of claims 7 to 13, **characterised in that** an alternating current source is rectified for providing a direct voltage and the amplitude of the direct voltage is controlled for setting a heating current variable in the initialisation phase.

15. Method according to claim 14, **characterised in that** the setting of the amplitude of the heating voltage is carried out by means of a digitally controllable voltage regulator (31).

## Revendications

1. Appareil de commande pour un instrument de coupe de cheveux chauffant avec au moins un tranchant, comprenant :
- un dispositif de commande ;
- un moyen pour introduire au moins un paramètre de fonctionnement prédéterminé, en particulier une température de consigne, du au moins un tranchant de l'instrument de coupe de cheveux ;
- un dispositif de commutation de puissance, pour fournir une tension de chauffage ;
- un moyen, pour raccorder l'instrument de coupe de cheveux chauffant à l'appareil de commande ;
- un moyen, pour détecter le courant de chauffage réel, et
- un moyen, pour détecter la température réelle du au moins un tranchant de l'outil de coupe de cheveu, sachant que le dispositif de commande actionne le dispositif de commutation de puissance pour fournir la tension de chauffage en réaction à la température de consigne et à la température réelle,
**caractérisé par** un moyen (11) commandé par le dispositif de commande, pour augmenter, de façon discrète, la tension de chauffage, ainsi qu'un moyen pour comparer un courant de chauffage réel, détecté pour une tension de chauffage réglée, à un courant de chauffage de consigne prédéterminé, sachant que l'augmentation pas à pas de la tension de chauffage peut être interrompue si le courant de chauffage réel est dans les limites d'une fourchette prédéterminée par rapport au courant de chauffage de consigne.

2. Appareil de commande selon la revendication 1, **caractérisé par** un dispositif de mémorisation (12) pour mémoriser le courant de chauffage de consigne prédéterminé et pour placer une tension de chauffage détectée et/ou un paramètre de réglage pour régler la tension de chauffage détecté, pour laquelle le courant de chauffage de consigne prédéterminé passe.

3. Appareil de commande selon la revendication 1 ou 2, **caractérisé par** une commande à deux points du courant de chauffage pour la régularisation de la température du au moins un tranchant de l'instrument de coupe de cheveux (100), sachant que la tension de chauffage réglée est la tension de chauffage détectée, pour laquelle le courant de chauffage réel est situé dans les limites d'une fourchette prédéterminée par rapport au courant de chauffage de consigne.

4. Appareil de commande selon la revendication 1, 2 ou 3, **caractérisé en ce que** le dispositif de commutation de puissance (30) présente une source de tension, comprenant un dispositif transformateur AC/CC (32) alimenté par réseau ou une source de courant continu branchée en aval du régulateur CC/CC (31) commandé par le dispositif de commande, pour fournir une tension de chauffage variable.

5. Appareil de commande selon l'une des revendications 1 à 4, **caractérisé en ce qu'**un dispositif d'introduction est prévu, avec lequel une température de consigne peut être introduite, ainsi qu'un dispositif d'affichage (70), pour afficher la température de consigne introduite et pour afficher le moment auquel la température réelle atteint la température de consigne réglée.

6. Appareil de commande selon la revendication 5, **caractérisé en ce que** le dispositif d'introduction (20) présente une touche unique, multifonctionnelle, avec laquelle, outre l'introduction de la température de consigne, on peut également mettre hors service l'appareil de commande.

7. Procédé de fonctionnement d'un appareil de commande pour un instrument de coupe de cheveux chauffant, avec au moins un tranchant, en particulier pour le fonctionnement d'un appareil de commande selon l'une des revendications 1 à 6, sachant que la température réelle du au moins un tranchant est détectée et réglée par modification du courant de chauffage et/ou de la tension de chauffage à une température de consigne, **caractérisé en ce que**, dans une phase d'initialisation, la tension de chauffage est augmentée pas à pas en partant d'une valeur minimale prédéterminée, le courant de chauffage réel respectif est déterminé, lorsque la tension de chauffage réel est réglée, le courant de chauffage réel mesuré est comparé à un courant de chauffage de consigne prédéterminé, et l'augmentation de la tension de chauffage est interrompue, lorsque le courant de chauffage réel est à l'intérieur d'une fourchette prédéterminée par rapport au courant de chauffage de consigne.

8. Procédé selon la revendication 7, **caractérisé en ce que** la valeur déterminée, de la tension de chauffage ou des paramètres de réglage associés à cette valeur, est ou sont mémorisés pour régler le courant de chauffage de consigne prédéterminé.

9. Procédé selon la revendication 7 ou 8, **caractérisé en ce que**, après le nouveau réglage d'une température de consigne, une phase d'initialisation est lancée pour déterminer la tension de chauffage, phase qui provoque le courant de chauffage de consigne prédéterminé.

10. Procédé selon l'une des revendications 7 à 9, **caractérisé en ce que**, dans une phase de régulation se raccordant à la phase d'initialisation, la valeur, déterminée dans la phase d'initialisation, de la tension de chauffage, est utilisée pour régler le courant de chauffage de consigne prédéterminé dans une régulation à deux points du courant de chauffage du au moins tranchant de l'instrument de coupe des cheveux (100).

11. Procédé selon l'une des revendications 7 à 10, **caractérisé en ce que**, en une phase de régulation se raccordant à la phase d'initialisation, la tension de chauffage déterminée est appliquée pour fournir un courant de chauffage à l'instrument de coupe de cheveux, tant que la température réelle est inférieure à la somme, de la température de consigne réglée et d'une différence de température ΔT1 prédéterminée, en particulier de 3 degrés.

12. Procédé selon la revendication 10 ou 11, **caractérisé en ce que**, dans la phase de régulation, en partant d'une tension de chauffage égale à zéro, la tension de chauffage déterminée est appliquée pour fournir un courant de chauffage à l'outil de coupe de cheveux, lorsque la température réelle est inférieure à la différence, de la température de consigne réglée et d'une différence de température ΔT2 prédéterminée, en particulier de 2 degrés.

13. Procédé selon l'une des revendications 7 à 12, **caractérisé en ce que** la tension de chauffage, réglée dans une phase de chauffage, est mémorisée, et la tension de chauffage mémorisée est réglée lors de la phase de chauffage suivante.

14. Procédé selon l'une des revendications 7 à 13, **caractérisé en ce qu'**une source de courant alternatif est redressée pour fournir une tension continue, et l'amplitude de la tension continue est commandée pour régler un courant de chauffage variable à la phase d'initialisation.

15. Procédé selon la revendication 14, **caractérisé en ce que** le réglage de l'amplitude de la tension de chauffage est effectué au moyen d'un régulateur de tension (31), pouvant être commandé de façon numérique.
